**Europäisches Patentamt**

**European Patent Office**

**Office européen des brevets**

(19)

(11) Veröffentlichungsnummer : **0 062 735**
**B1**

(12)

# EUROPÄISCHE PATENTSCHRIFT

(45) Veröffentlichungstag der Patentschrift :
**15.05.85**

(51) Int. Cl.⁴ : **G 01 B 7/02**

(21) Anmeldenummer : **82100830.7**

(22) Anmeldetag : **05.02.82**

(54) **Gekapselte, digitale elektrische Positionsmesseinrichtung.**

(30) Priorität : **04.04.81 DE 3113698**

(43) Veröffentlichungstag der Anmeldung :
**20.10.82 Patentblatt 82/42**

(45) Bekanntmachung des Hinweises auf die Patenterteilung : **15.05.85 Patentblatt 85/20**

(84) Benannte Vertragsstaaten :
**AT CH FR GB IT LI NL SE**

(56) Entgegenhaltungen :
**EP-A- 0 001 555**
**EP-A- 0 013 335**
**DE-A- 1 773 403**
**DE-A- 2 510 219**

(73) Patentinhaber : **Dr. Johannes Heidenhain GmbH**
**Nansenstrasse 17**
**D-8225 Traunreut (DE)**

(72) Erfinder : **Ernst, Alfons, Dipl.-Ing.**
**Traunring 62**
**D-8225 Traunreut (DE)**

## Beschreibung

Die Erfindung bezieht sich auf eine gekapselte, digitale elektrische Positionsmeßeinrichtung nach dem Oberbegriff des Anspruches 1.

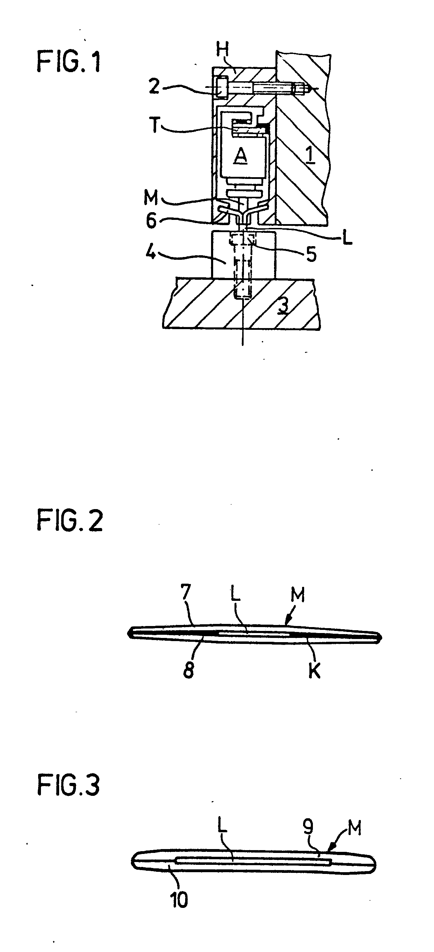

Eine derartige Meßeinrichtung ist beispielsweise aus der DE-OS 17 73 403 bekannt. Dort wird ein in einem Hohlkörper angeordneter Maßstab mittels einer Abtasteinrichtung fotoelektrisch abgetastet. Der Hohlkörper ist dabei an einem der Maschinenteile angebracht, deren Relativbewegung gemessen werden soll. Über einen Mitnehmer mit etwa schwertförmigem Querschnitt ist die Abtasteinrichtung mit dem anderen der zu messenden Maschinenbauteile verbunden. Die erforderlichen Leitungen zur Versorgung der Beleuchtung und zur Ausleitung der gewonenen Meßsignale werden als Kabelstrang durch einen Schlitz im Mitnehmer aus der Meßeinrichtung herausgeführt (dort Figur 3). Der Querschnitt bzw. die Dicke des Mitnehmers ist aus diesem Grunde nur in beschränktem Maße verringerbar. Um jedoch die den Längsschlitz des Hohlprofiles abdichtenden dachförmigen Dichtlippen möglichst wenig zu spreizen, wird immer ein Mitnehmer möglichst kleinen Querschnittes bzw. kleiner Dicke angestrebt. Aus den vorstehenden Gründen sind diesen Bestrebungen jedoch Grenzen gesetzt.

Es ist die Aufgabe der Erfindung, einen Mitnehmer zu schaffen, der sowohl die elektrischen Leitungen aufnimmt, diese vor Beschädigung, und die elektrischen Signale vor Störeinflüssen schützt, in Meßrichtung hinreichende Steifigkeit aufweist und dennoch einen erheblich geringeren Querschnitt bzw. geringere Dicke aufweist, als durch den Stand der Technik bekannt ist.

Diese Aufgabe wird durch die im kennzeichnenden Teil des Anspruchs 1 angegebenen Merkmale gelöst.

Die Vorteile der Erfindung liegen in der erzielbaren geringen Dicke des Mitnehmers. Gegenüber 3 mm bis 4 mm dicken Mitnehmern gemäß dem Stand der Technik sind nach der Erfindung Mitnehmer realisierbar, die lediglich 0,5 mm bis 1 mm dick sind. Weitere erhebliche Vorteile sind der Schultz vor Beschädigung der Leiterbahnen und die Abschirmung gegen Störfelder trotz der geringen Dicke des Mitnehmers. Kostenvorteile ergeben sich, wenn die beiden Platten identische Bauteile sind, da nur ein Herstellungswerkzeug gebaut werden muß und sich die Lagerhaltung vereinfacht.

Dies stellt einen enormen technischen Fortschritt dar, da durch die zunehmende Miniaturisierung der elektronischen Bausteine bisher zwar eine drastische Verkleinerung der Abtasteinrichtung und dementsprechend des Hohlprofiles möglich war, jedoch stand die relativ große Dimensionierung des Mitnehmers im Widerspruch zu der angestrebten Verkleinerung der gesamten Meßeinrichtung.

Der erfindungsgemäß mit Leiterplatte ausgebildete Mitnehmer stellt eine neuartige Wirkungseinheit dar, da durch ihn sowohl die mechanischen Kräfte übertragen werden als auch die elektrischen Verbindungen zwischen dem Inneren und dem Äußeren der Meßeinrichtung hergestellt werden.

Zudem ergeben sich Montagevorteile, da der Mitnehmer Steckverbindungen aufweist, so daß jegliche Verkabelung und Verlötung entfallen kann.

Die Erfindung wird mit Hilfe der Zeichnungen anhand von Ausführungsbeispielen noch näher erläutert.

Es zeigen

Figur 1 einen Querschnitt durch ein schematisch dargestelltes Längenmeßsystem,

Figur 2 einen Querschnitt durch einen Mitnehmer geringer Dicke in vergrößerter Darstellung,

Figur 3 einen Querschnitt durch einen weiteren Mitnehmer geringer Dicke in vergrößerter Darstellung,

Figur 4 eine schematisierte Seitenansicht eines Mitnehmers, eingesteckt in eine Abtasteinrichtung und eine Befestigungseinrichtung.

Die in Figur 1 geschnitten gezeigte miniaturisierte gekapselte Längenmeßeinrichtung weist einen mit einer Teilung versehenen Maßstab T auf, der in einem stranggezogenen Hohlprofil H elastisch eingeklebt ist. Das Hohlprofil H ist an einem Maschinenbauteil 1 mit Schrauben 2 befestigt. An einem weiteren Maschinenbauteil 3, das gegenüber dem Maschinenbauteil 1 relativ verschoben werden kann, ist eine Befestigungseinrichtung 4 mit Schrauben 5 angebracht. In die Befestigungseinrichtung 4 ist ein Mitnehmer M eingesteckt, der an seinem entgegengesetzten freien Ende in eine Abtasteinrichtung A eingesteckt ist. Die Abtasteinrichtung A tastet fotoelektrisch die Teilung des Maßstabes T ab. Bei Relativverschiebungen zwischen den Maschinenbauteilen 1 und 3 werden durch die Abtastung des Maßstabes T Meßsignale erzeugt, die über den in Leiterbahntechnik als gedruckte Schaltung ausgeführten Mitnehmer M aus der Abtasteinrichtung A über die Befestigungseinrichtung 4 aus der Meßeinrichtung herausgeführt werden, um über nicht dargestellte Kabel einer nicht dargestellten Auswerte-Anzeigebaueinheit zugeführt zu werden. Der mit dachförmig angeordneten elastischen Dichtlippen 6 abgedichtete Längsschlitz im Hohlprofil H wird von dem schlanken Mitnehmer M nur unwesentlich aufgespreizt, so daß eine gute Abdichtung der Meßeinrichtung gegenüber schädlichen Umgebungseinflüssen erzielt wird.

Der in Figur 2 in vergrößerter Querschnitts-Darstellung gezeigte Mitnehmer M ist aus zwei dünnen Blechen 7 und 8 gebildet, die eine flexible, äußerst dünne gedruckte Schaltung L einschließen. Die beiden Bleche 7 und 8 sind miteinander verklebt und gegen die gedruckte Schaltung L isoliert. Die Schneiden des im Querschnitt schwertförmigen Mitnehmers M sind leicht gerundet, so daß die Dichtlippen 6 nicht beschädigt werden.

Die in Figur 3 dargestellte Ausführungsform zeigt einen zweischaligen Mitnehmer M, deren Schalen 9 und 10 auf der Innenseite geätzt sind, so daß in dem freigeätzten Raum eine äußerst dünne flexible Leiterplatte L untergebracht werden kann. Die beiden Schalen 9 und 10 können verklebt oder ultraschallverschweißt sein.

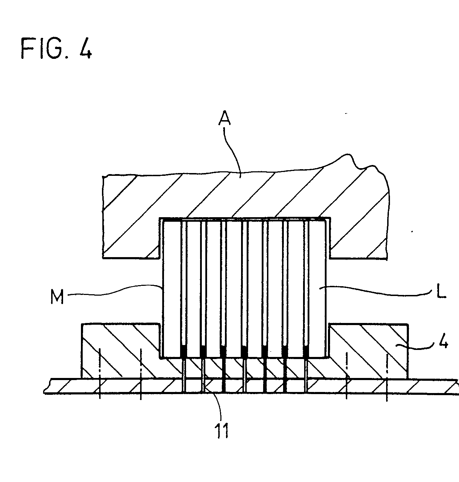

In Figur 4 ist schematisch gezeigt, wie ein als gedruckte Schaltung L ausgebildeter Mitnehmer M sowohl in die Abtasteinrichtung A als auch in die Befestigungseinrichtung 4 eingesteckt ist. Die Leiterplatte L wird in dieser Stellung in bekannter Weise durch Klemmung fixiert, wobei gleichzeitig die elektrischen Kontakte durch eine Kontaktklemmleiste 11 hergestellt werden, die in abgewandelter Form auch in der Abtasteinrichtung eingebaut ist.

Ein Mitnehmer läßt sich unter Verwendung der Erfindung vom Fachmann noch auf vielfältige Weise ausgestalten, so daß die gezeigten Ausführungsbeispiele keineswegs für die Erfindung erschöpfend sind.

Das vorbeschriebene Ausführungsbeispiel bezieht sich ausschließlich auf eine Längenmeßeinrichtung, jedoch läßt sich die Positionsmeßeinrichtung auch als gekapselte Winkelmeßeinrichtung gemäß DE-AS 28 41 501 ausbilden.

## Patentansprüche

1. Gekapselte, digitale elektrische Positionsmeßeinrichtung zum Messen der Lage zweier relativ zueinander beweglicher Objekte mit einem einen Maßstab tragenden, längsseitig geschlitzten, mit dachförmigen Dichtlippen abgedichteten Hohlkörper und einer den Maßstab abtastenden Abtasteinrichtung, wobei der Hohlkörper an einem der relativ zueinander beweglichen Objekte befestigt ist, und die Abtasteinrichtung mit Hilfe eines den Längsschlitz durchgreifenden schwertartigen Mitnehmers am anderen Objekt angebracht ist, dadurch gekennzeichnet, daß der Mitnehmer (M) aus mindestens zwei dünnen, in Meßrichtung steifen, unlösbar miteinander verbundenen Platten (7, 8, 9, 10) besteht, die zwischen sich elektrische Leiter in Form einer an sich bekannten gedruckten Schaltung (L) tragen.

2. Gekapselte, digitale elektrische Positionsmeßeinrichtung nach Anspruch 1, dadurch gekennzeichnet, daß der Mitnehmer (M) steckbar ausgebildet ist.

## Claims

1. Encapsulated digital electric position measuring device for measuring the position of two objects, which can be moved relative to each other, comprising a longitudinally slotted hollow body which is sealed with roofshaped sealing lips and which carries a scale, and a scanning device which scans the scale, the hollow body being mounted on one of the objects which can be moved relative to each other and the scanning device being mounted, with the aid of a swordlike tongue which projects through the longitudinal slot, at the other object, characterised in that the tongue (M) consists of at least two thin plates (7, 8, 9, 10) which are rigid in the measuring direction and are undetachably joined to each other and carry between them electric conductors in the form of a printed circuit (L) know in itself.

2. Encapsulated digital electric position measuring device according to Claim 1, characterised in that the tongue (M) is constructed to be insertable.

## Revendications

1. Dispositif électrique blindé pour la mesure numérique de la position de deux objets mobiles l'un par rapport à l'autre, comprenant un corps creux portant une échelle graduée, fendu dans le sens longitudinal et étanché par des lèvres d'étanchéité en forme de toit ainsi qu'un dispositif de balayage balayant l'échelle graduée, le corps creux étant fixé sur l'un des objets mobiles par rapport à l'autre, et le dispositif de balayage étant maintenu sur l'autre objet à l'aide d'un entraîneur en forme d'épée passant à travers la fente longitudinale, caractérisé par le fait que l'entraîneur (M) est constitué par au moins deux plaques minces (7, 8, 9, 10) qui, rigides dans le sens de la mesure et mutuellement raccordées de façon inamovible, portent entre elles des conducteurs électriques sous forme d'un circuit imprimé (L) en soi connu.

2. Dispositif électrique blindé pour la mesure numérique des positions selon la revendication 1, caractérisé par le fait que l'entraîneur (M) est réalisé enfichable.

FIG.1

FIG.2

FIG.3

FIG. 4